# EUROPÄISCHE PATENTANMELDUNG

(11) **EP 2 869 013 A1**
(43) Veröffentlichungstag der Anmeldung: **06.05.2015**
(21) Anmeldenummer: 13005204.6
(22) Anmeldetag: 05.11.2013
(51) Int. Cl.: F28D 9/00, F28F 3/02, F24J 2/07

(54) **Verfahren zum indirekten Wärmeaustausch zwischen einer Salzschmelze und einem Wärmeträger in einem Solarthermiekraftwerk**

(71) Anmelder: Linde Aktiengesellschaft, 80331 München (DE)
(72) Erfinder: Hölzl, Reinhold, 82538 Geretsried (DE)
(74) Vertreter: Meilinger, Claudia Sabine

(57) **Zusammenfassung**

Die Erfindung betrifft ein Verfahren zum indirekten Wärmeaustausch zwischen einer Salzschmelze (S) als erstem Wärmeträger und mindestens einem zweiten Wärmeträger (W) in einem Solarthermiekraftwerk. Erfindungsgemäß ist vorgesehen, dass die Salzschmelze (S) und der zweite Wärmeträger (W) zur Durchführung des indirekten Wärmetauschs durch nebeneinanander angeordnete Passagen eines Plattenwärmeübertragers (1) geleitet werden, wobei die Passagen jeweils eine Wärmeleitstruktur (30) aufweisen.

## Beschreibung

Die Erfindung betrifft ein Verfahren zum indirekten Wärmeaustausch zwischen einer Salzschmelze als einem erstem Wärmeträger und mindestens einem zweiten Wärmeträger in einem Solarthermiekraftwerk.

Hierbei ist unter einem Wärmeträger ein flüssiges, gasförmiges oder überkritisches Medium zu verstehen, das an einer Stelle des Kraftwerksprozesses eine Wärmemenge aufnimmt bzw. abgibt, die es an anderer Stelle des Kraftwerksprozesses oder außerhalb dieses wieder abgibt bzw. aufnimmt. In diesem Sinne ist auch ein Arbeitsmedium als Wärmeträger anzusehen, dem im Kraftwerksprozess thermische Energie zugeführt wird, um diese in mechanische Arbeit umzusetzen.

In Solarthermiekraftwerken wird aus Sonnenenergie über einen thermodynamischen Kreisprozess elektrischer Strom erzeugt. Hierbei wird ein in einem Kreislauf zirkulierendes Arbeitsmedium (z. B. Wasser oder Ammoniak) erwärmt und überhitzter Dampf erzeugt, der in einer mit einem Stromgenerator gekoppelten Dampfturbine arbeitsleistend entspannt wird. Dem Arbeitsmedium kann dabei direkt über die Sonnenstrahlung oder indirekt über einen Wärmeträger (z.B. Thermoöl, Salzschmelze) Wärme zugeführt werden, der seinerseits über konzentriertes Sonnenlicht erhitzt wird.

Um auch bei nicht ausreichender Sonneneinstrahlung (z.B. nachts oder tagsüber bei Wolken) elektrische Energie erzeugen zu können, kann ein Teil der eingestrahlten Sonnenwärme mit Hilfe desselben (direkt) oder eines anderen Wärmeträgers (indirekt) zwischengespeichert werden. Üblicherweise werden zur Wärmespeicherung Salzschmelzen (typischerweise eutektische Mischungen aus KNO₃ und NaNO₃) eingesetzt, die direkt oder über einen anderen Wärmeträger, wie beispielsweise Thermoöl, indirekt auf Temperaturen von üblicherweise zumindest zwischen 250°C aufgeheizt und z.B. in Flachbodentanks gespeichert werden, und die ihre Wärme direkt oder indirekt an das Arbeitsmedium abgeben.

Für den indirekten Wärmeaustausch zwischen den Wärmeträgern werden für gewöhnlich herkömmliche Geradrohrtauscher verwendet. Nachteilig hieran ist jedoch der prinzipbedingt vergleichsweie hohe Bauraumbedarf derartiger Wärmeübertrager

Hiervon ausgehend liegt daher der vorliegenden Erfindung die Aufgabe zugrunde, ein Verfahren der eingangs dargelegten Art zu schaffen, das hinsichtlich des Bauraumbedarfs verbessert ist.

Dieses Problem wird durch ein Verfahren mit den Merkmalen des Anspruchs 1 gelöst. Vorteilhafte Ausgestaltungen der Erfindung sind in den Unteransprüchen angegeben und werden des Weiteren nachfolgend beschrieben.

Gemäß Anspruch 1 ist vorgesehen, dass die Salzschmelze und der zweite Wärmeträger zur Durchführung des indirekten Wärmetauschs durch nebeneinander angeordnete Passagen eines Plattenwärmeübertragers geleitet werden, wobei die Passagen jeweils eine Wärmeleitstruktur aufweisen sowie insbesondere durch die jeweilige Wärmeleitstruktur begrenzt werden. Die Wärmeleitstrukturen dienen dazu, Wärme aufzunehmen und an angrenzende Komponenten, z.B. Trennbleche, des Plattenwärmeübertragers weiterzuleiten.

Derartige, insbesondere stahlgelötete, Plattenwärmeübertrager weisen bauartbedingt, insbesondere aufgrund der Wärmeleitstrukturen, im Vergleich zum benötigten Bauraum eine große innere Oberfläche auf, die für die indirekte Wärmeübertragung zwischen Wärmeträgern in einem Solarthermiekraftwerk mit Vorteil genutzt werden kann.

Mit dem Einsatz von insbesondere stahlgelöteten Plattenwärmeübertragern kann daher der Platzbedarf im Vergleich zu herkömmlichen Wärmeübertragern deutlich reduziert werden, was entsprechend günstige Anlagenkonzepte ermöglicht.

Vorzugsweise sind die Wärmeleitstrukturen jeweils aus einem Stahl, insbesondere Edelstahl, gefertigt oder weisen einen solchen Stahl auf. Bei den Wärmeleitstrukturen, handelt es sich gemäß einer Ausführungsform der Erfindung um flächige, plattenartige Elemente, die sich entlang einer Erstreckungsebene erstrecken, und in einem senkrecht zur Erstreckungsebene verlaufenden Querschnittsebene ein wellenförmiges bzw. mäanderförmiges Profil aufweisen. Solche Wärmeleitstrukturen werden auch als Fins bezeichnet.

Gemäß einer weiteren Ausführungsform können die Wärmeleitstrukturen durch mehrere nebeneinander angeordnete Metallprofile gebildet werden, die vorzugsweise aus einem Stahl, insbesondere Edelstahl, gebildet sind.

Bei derartigen Metallprofilen kann es sich z.B. um Hohlprofile mit einem insbesondere rechteckförmigen Querschnitt handeln oder um Doppel-T-Profile.

Vorzugsweise ist die jeweilige Wärmeleitstruktur zwischen je zwei einander gegenüberliegenden Trennblechen angeordnet, die an der jeweiligen Wärmeleitstruktur anliegen.

Bei einer Wärmeleitstruktur in Form eines Fins wird dabei eine Passage des Plattenwärmetauschers gebildet, die aufgrund des Wellenprofils des jeweiligen Fins eine Mehrzahl an insbesondere parallelen Kanälen aufweisen kann, in denen der jeweilige Wärmeträger geführt werden kann.

Bei einer aus Metallprofilen bestehenden Wärmeleitstruktur liegen die Metallprofile vorzugsweise jeweils mit einander gegenüberliegenden Schenkeln an den angrenzenden Trennblechen an. Wobei jene Schenkel bei einem Hohlprofil durch zwei Verbindungschenkel miteinander verbunden sind, so dass sich ein Hohlprofil ergibt. Bei einem Doppel-T-Profil hingegen sind die beiden Schenkel durch einen einzelnen Verbindungsschenkel miteinander verbunden.

Vorzugsweise sind die Trennbleche ebenfalls aus einem Stahl, insbesondere Edelstahl, gefertigt oder weisen einen solchen Stahl auf.

Besonders bevorzugt sind die jeweils benachbarten Trennbleche über eine Lötverbindung mit einander verbunden. Weiterhin sind besonders bevorzugt die Wärmeleitstrukturen, insbesondere die einzelnen Profile, mit den jeweils beidseitig angeordneten Trennblechen über je eine Lötverbindung verbunden.

Zu den Seiten hin werden die einzelnen Passagen bevorzugt durch Randleisten, sogenannte Sidebars, begrenzt, die ebenfalls bevorzugt aus einem Stahl, insbesondere einem Edelstahl, gefertigt sind bzw. einen solchen Stahl aufweisen. Die Randleisten sind bevorzugt ebenfalls jeweils zwischen zwei Trennplatten angeordnet und mit diesen bevorzugt über eine Lötverbindung verbunden. Die beiden äußersten Trennplatten des Plattenwärmeübertragers werden auch als Deckplatten bezeichnet.

Durch den Einsatz derartiger aus Stahl, insbesondere Edelstahl, gelöteter Plattenwärmeübertrager, die auch als stahlgelötete Plattenwärmeübertrager bezeichnet werden, ist im Unterschied zu den aus Aluminium gelöteten Plattenwärmeüberfragern eine Anwendung auch im Temperaturbereich von 400°C bis etwa 600°C - je nach verwendetem Werkstoff - möglich. Da es ich bei den wärmeaustauschenden Strömen üblicherweise um flüssige Fluide handelt, treten wärmetechnische und mechanische Probleme durch einen Phasenübergang nicht auf.

Vorzugsweise liegt die Temperatur der Salzschmelze bei dem erfindungsgemäßen Verfahren in einem Bereich zwischen 300°C bis 600°C, insbesondere im Bereich zwischen 400°C bis 600°C.

Bei dem zweiten Wärmeträger handelt es sich bevorzugt um eine Salzschmelze, Wasser, Dampf, Ammoniak, überkritisches Kohlendioxid oder ein Thermoöl.

Vorzugsweise werden zur Durchführung des besagten indirekten Wärmetauschs zwischen der Salzschmelze und dem zweiten Wärmeträger eine Mehrzahl an Plattenwärmeübertragern in einer Batterie zusammengeschaltet. Vorzugsweise wird die gesamte zwischen der Salzschmelze und dem zweiten Wärmeträger zu übertragende Wärmemenge in mehreren parallel geschalteten Plattenwärmeübertragern ausgetauscht. D.h., die Salzschmelze bzw. der zweite Wärmeträger werden vor dem Einleiten in den Plattenwärmeübertrager in mehrere Teilströme aufgeteilt, wobei z.B. in den einzelnen Plattenwärmeübertragern jeweils ein Teilstrom der Salzschmelze und ein zugeordneter Teilstrom des zweiten Wärmeträgers in einen indirekten Wärmeaustausch gebracht werden. Nachdem die Teilströme die Plattenwärmeübertrager durchlaufen haben, können sie wieder zu einem Salzschmelzestrom bzw. (zweiten) Wärmeträgerstrom zusammengeführt werden.

Die einzelnen Ströme werden bevorzugt über je einen Header mit Stutzen des mindestens einen Plattenwärmeübertragers in die zugeordneten Passagen des Plattenwärmeübertragers eingeleitet, wobei jene Header vorzugsweise mit dem jeweiligen Plattenwärmeübertrager verschweißt sind. Bei parallel geschalteten Plattenwärmeübertragern können diese zum Einleiten bzw. Ausleiten eines Stromes aus den Plattenwärmeübertragern je einen gemeinsamen Header aufweisen, der die Plattenwärmeübertrager miteinander verbindet, so dass der jeweilige Strom (z.B. Salzschmelze oder zweiter Wärmeträger) über den gemeinsamen Header in alle Plattenwärmübertrager eingeleitet werden kann sowie über einen weiteren (z.B. gegenüberliegenden) gemeinsamen Header aus den parallel verschalteten Plattenwärmeübertragern abgezogen werden kann.

Die Verwendung mehrerer Plattenwärmeübertrager hat auch Vorteile hinsichtlich der Austauschbarkeit einzelner Plattenwärmeübertrager. So können z.B. einzelne Plattenwärmeübertrager nach Überschreiten ihrer Lebensdauer oder bei Beschädigungen aus dem Verbund herausgenommen und ggf. ersetzt bzw. überholt werden.

Weiterhin betrifft die Erfindung gemäß Anspruch 11 ein Solarthermiekraftwerk, mit zumindest einem Wärmeübertrager, der zum indirekten Wärmeaustausch zwischen einer Salzschmelze als erstem Wärmeträger und mindestens einem zweiten Wärmeträger ausgebildet ist, wobei erfindungsgemäß der mindestens eine Wärmeübertrager als ein Plattenwärmeübertrager ausgebildet ist, der zum Führen der Salzschmelze und des zweiten Wärmeträgers Passagen mit je einer Wärmeleitstruktur aufweist, wobei insbesondere die Wärmeleitstrukturen aus einem Stahl gefertigt sind oder einen Stahl aufweisen.

Bevorzugt ist vorgesehen, dass die jeweilige Wärmeleitstruktur zwischen je zwei einander gegenüberliegenden Trennblechen des Plattenwärmeübertragers angeordnet ist. Die Trennbleche des Plattenwärmeübertragers sind des Weiteren gemäß einer bevorzugten Ausgestaltung des erfindungsgemäßen Kraftwerks aus einem Stahl gefertigt bzw. weisen einen Stahl auf. Vorzugsweise sind benachbarte Trennbleche über Lötverbindungen miteinander verbunden. Diese Verbindung kann z.B. über die jeweilige Wärmeleitstruktur hergstellt werden, die bevorzugt jeweils beidseitig mit den angrenzenden Trennblechen über je eine Lötverbindung verbunden ist. Weiterhin sind die Trennbleche jeweils mit den oben beschriebenen Randleisten verlötet.

Gemäß einer weiteren bevorzugten Ausgestaltung des Kraftwerks sind für den besagten Wärmeaustausch zwischen der Salzschmelze und dem mindestens einen zweiten Wärmeträger mehrere parallel geschaltete Plattenwärmeübertrager vorgesehen, die vorzugsweise wie oben beschrieben miteinander verbunden sind.

Die Wärmeleitstrukturen des mindestens einen Plattenwärmeübertragers des Kraftwerks können ferner wie oben beschrieben ausgeführt sein.

Weitere Einzelheiten und Vorteile der Erfindung sollen durch die nachfolgenden Figurenbeschreibungen von Ausführungsbeispielen anhand der Figuren erläutert werden. Es zeigen:
- Fig. 1: eine schematische Darstellung des erfindungsgemäßen Verfahrens;
- Fig. 2: eine perspektivische teilweise geschnittene Ansicht eines Plattenwärmeübertragers, der in dem erfindungsgemäßen Verfahren bzw. Kraftwerk eingesetzt werden kann;
- Fig. 3: eine schematische Schnittansicht einer Wärmeleitstruktur;
- Fig. 4: eine schematische Schnittansicht einer weiteren Wärmeleitstruktur; und
- Fig. 5: eine schematische Schnittansicht einer weiteren Wärmeleitstruktur.

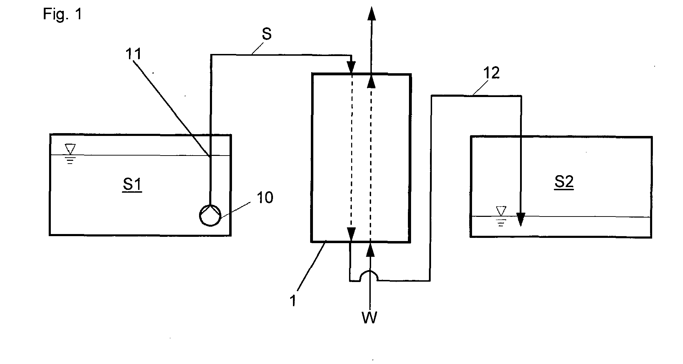

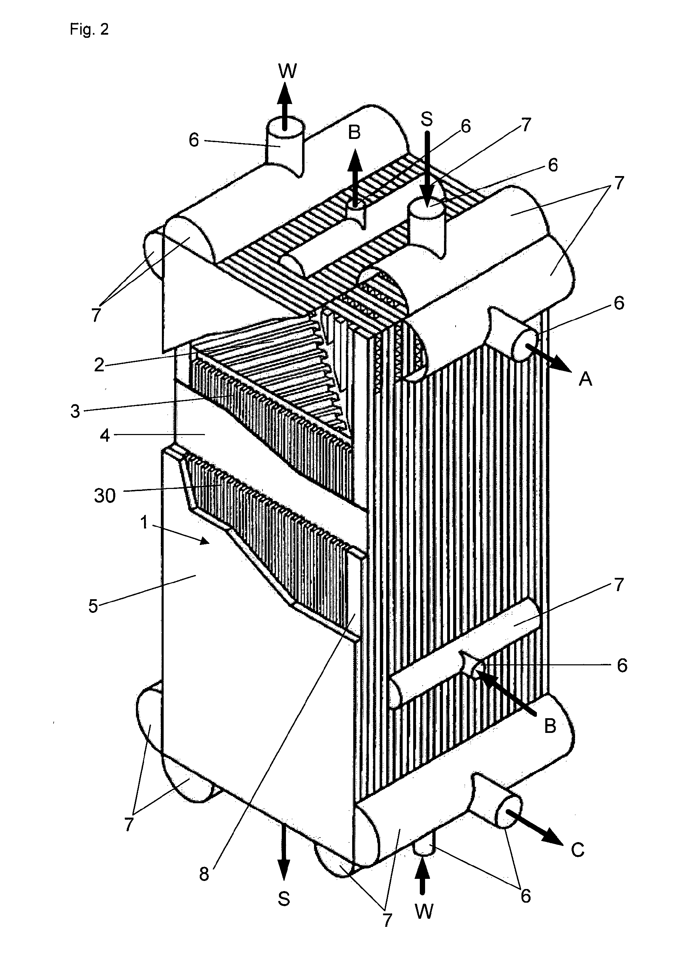

Gemäß Figur 1 ist bei dem erfindungsgemäßen Verfahren vorgesehen, dass z.B. aus einem Speichertank S1 ein erster Wärmeträger in Form einer Salzschmelze S mit einer Temperatur von beispielsweise 400°C bis 600°C entnommen wird und einem Plattenwärmeübertrager 1 zugeführt wird, der in der Figur 2 gezeigten Art ausgeführt sein kann.

Ein solcher Plattenwärmeübertrager 1 ist gemäß Figur 2 für den Wärmeaustausch zwischen zumindest zwei Strömen S, W ausgebildet, bei denen es sich vorliegend um die Salzschmelze S und einen weiteren Wärmeträger W handelt, wobei optional Wärmeaustauschmöglichkeiten für weitere Prozessströme A, B, C vorgesehen sein können. Der Plattenwärmeübertrager 1 ist blockförmig ausgebildet und mit verschiedensten Mitteln 6 zur Zu- und Abführung der einzelnen Prozessmedien S, W ausgestattet, die auch als Stutzen bezeichnet werden. Der Plattenwärmeübertrager 1 weist ebenfalls mehrere Mittel 7 zum Verteilen und Sammeln der einzelnen Prozessströme S, W bzw. A, B, C auf, die auch als Header bezeichnet werden.

Im Wesentlichen besteht der Plattenwärmeübertrager 1 aus einer Vielzahl stapelförmig angeordneter Passagen 3, die durch Trennbleche 4 voneinander getrennt sind und nach außen hin beidseitig durch Deckbleche 5 begrenzt sind. In den einzelnen Passagen 3 strömen die verschiedenen Medien S, W. Der Wärmeaustausch erfolgt indirekt über den Wärmekontakt, der durch die Trennbleche 4 und durch die in den Passagen 3 angeordnete Wärmeleitstruktur 30 hergestellt wird.

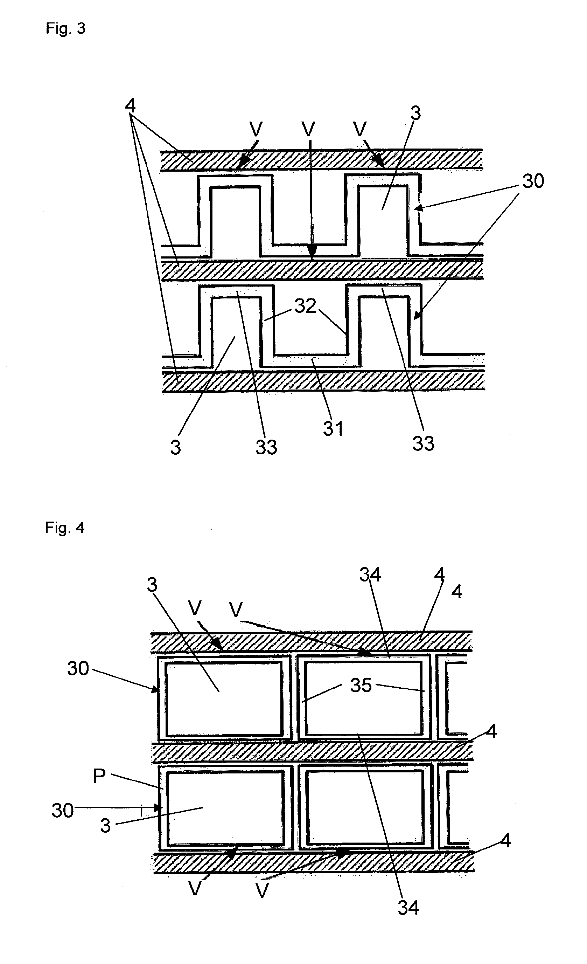

Gemäß den Figuren 2 und 3 kann es sich hierbei um eine wellenförmige Struktur 30 handeln, die auch als Fin bezeichnet wird, Diese weist einander gegenüberliegende, versetzt zueinander angeordnete Schenkel 31, 33 auf, die vorzugsweise jeweils über eine Lötverbindung V mit einem angrenzenden Trennblech 4 des Plattenwärmeübertragers 1 verbunden sind, wobei jene Schenkel 31, 33 durch quer zu den Trennblechen 4 verlaufende Verbindungsschenkel 32 miteinander verbunden sind, so dass sich im Querschnitt ein wellenförmiges oder mäanderförmiges Profil des jeweiligen Fins 30 ergibt. Ein solches Profil kann - wie in der Fig. 3 gezeigt - eckig ausgebildet sein. Der jeweilige Verbindungsbereich zwischen einem Schenkel 31, 33 und einem Verbindungschenkel 32 kann jedoch auch verrundet ausgebildet sein. Die jeweiligen Fins 30 begrenzen mit den beiden jeweils angrenzenden Trennblechen 4 je eine Passage 3 des Plattenwärmeübertragers 1.

Gemäß Figur 4 kann eine Wärmeleitstruktur 30 auch durch mehrere nebeneinander angeordnete Metallprofile P, insbesondere in Form von Hohlprofilen P, gebildet werden, wobei die jeweiligen Metallprofile P einander gegenüberliegende Schenkel 34 aufweisen, die jeweils über eine Lötverbindung V mit einem angrenzenden Trennblech 4 des Plattenwärmeübertragers 1 verbunden sind, sowie je zwei Verbindungsschenkel 35, die sich quer zu den Trennblechen 4 erstrecken und die beiden Schenkel 34 miteinander verbinden, so dass sich ein Hohlprofil ergibt, das gemäß Fig. 4 im Querschnitt beispielsweise rechteckförmig ausgebildet ist.
Die Passage 3 kann bei Hohlprofilen P vollständig durch diese begrenzt werden, indem z.B. die Ströme im Innern der Hohlprofile P geführt werden.

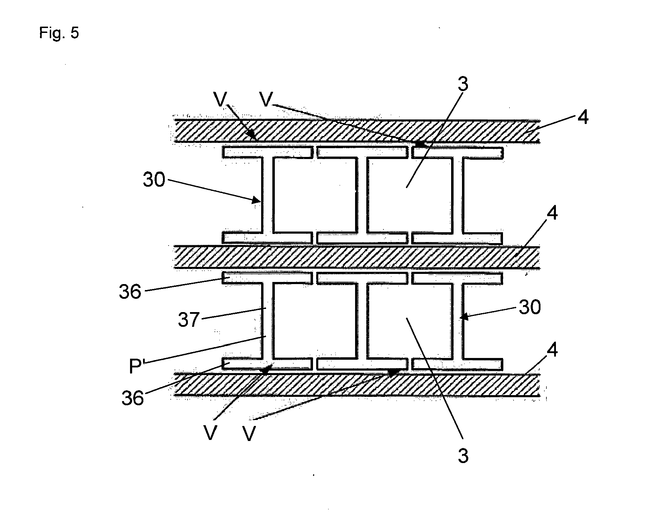

Gemäß Figur 5 kann eine Wärmeleitstruktur 30 auch durch mehrere nebeneinander angeordnete Metallprofile in Form von Doppel-T-Profilen P', gebildet werden, wobei die jeweiligen Metallprofile P' wiederum einander gegenüberliegende Schenkel 36 aufweisen, die jeweils über eine Lötverbindung V mit einem angrenzenden Trennblech 4 des Plattenwärmeübertragers 1 verbunden sind, sowie je einen Verbindungsschenkel 37, der sich quer zu den Trennblechen 4 erstreckt und die beiden Schenkel 36 miteinander verbindet, so dass sich ein Doppel-T-Profil ergibt. Die Metallprofile P' können gemäß Fig. 5 so nebeneinander angeordnet werden, dass die Schenkel 36 sowie Verbindungsschenkel 37 die jeweilige Passage 3 begrenzen.

Über die Stutzen 6 werden die einzelnen Medien S, W in die Header 7 geführt und so auf die jeweils vorgesehenen, stapelförmig angeordneten Passagen 3 verteilt. Im Eingangsbereich der Passagen 3 befinden sich sogenannte Verteilerfins 2, die für eine gleichmäßige Verteilung des Mediums S, W innerhalb der einzelnen Passagen 3 sorgen. Die Medien S, W strömen somit quer zur Wellenrichtung der Fins 3 bzw. entlang der Profile P, P' durch die Passagen 3. Die Wärmeleitstrukturen 30 sind mit den Trennblechen 4 verbunden, wodurch ein intensiver Wärmeleitkontakt hergestellt wird. Dadurch kann ein Wärmeaustausch zwischen zwei verschiedenen Medien S, W erfolgen, die in benachbarten Passagen 3 strömen. In Strömungsrichtung gesehen am Ende der Passage 3 befinden sich ähnliche Verteilerfins 2, die die Medien S, W aus den Passagen 3 in die Header 7 führen, wo sie gesammelt und über den Stutzen 6 abgezogen werden. Die einzelnen Passagen 3 sind durch sogenannte Sidebars oder Randleisten 8 nach außen abgeschlossen.

Der Plattenwärmeübertrager 1 wird bevorzugt aus Stahl gelötet. Die einzelnen Passagen 3 mit den Fins 30 bzw. Profilen P, P', Verteilerfins 2, Trennblechen 4, Deckblechen 5 und Sidebars 8 werden aufeinander gestapelt, mit Lot versehen und in einem Ofen hartgelötet. Auf den dadurch entstanden Block werden dann Header 7 und Stutzen 6 aufgeschweißt.

Durch das eben beschriebene Herstellungsverfahren und durch die Größe und Geometrie des Lötofens wird auch die maximale Größe eines derartigen Plattenwärmetauscherblockes 1 vorgegeben. Oft erfordern jedoch die Prozesserfordernisse größere Wärmeaustauschflächen und somit größere Wärmetauscherblöcke. Um diesen Anforderungen gerecht zu werden, können mehrere Plattenwärmeübertrager 1 nach Art der Figur 2 parallel geschaltet werden. Die Header 7 können sich dann von Plattenwärmeübertrager zu Plattenwärmeübertager erstrecken.

Gemäß Figur 2 wird die Salzschmelze S aus dem Speichertank S1 über eine Leitung 11 mittels einer Pumpe 10 dem Plattenwärmeübertrager 1 über den Stutzen 6 und Header 7 zugeführt, und durchströmt mit dem Header 7 in Strömungsverbindung stehende Passagen 3 (vgl. Fig. 2) von oben nach unten. Dabei tritt die Salzschmelze S mit einem zweiten Wärmeträger in Form von Wasser W, das am unteren Ende des Plattenwärmeübertagers 1 über einen Stutzen 6 und Header 7 in entsprechende Passagen 3 eingeleitet wird, in indirekten Wärmeaustausch. Das Wasser W wird beim Durchströmen der Passagen 3 von unten nach oben zunächst angewärmt, verdampft und schließlich überhitzt, bevor es als überhitzter Wasserdampf W den Plattenwärmeübertrager 1 über den entsprechenden Header 7 mit Stutzen 6 verlässt und nachfolgend einer nicht dargestellten Dampfturbine zugeführt wird. Die in dem Plattenwärmeübertrager 1 abgekühlte Salzschmelze S verlässt den Plattenwärmeübertrager 1 über den entsprechenden Stutzen 6 und wird über eine Leitung 12 in den Speichertank S2 geführt. Von dort aus kann die Salzschmelze S durch direkte oder indirekte Zuführung von Sonnenenergie wieder aufgeheizt werden, um dann erneut zum Wärmetausch im Plattenwärmeübertrager 1 zur Verfügung zu stehen.

Gemäß einem weiteren Beispiel kann es sich bei dem zweiten Wärmeträger W um ein Thermoöl handeln. Hierbei kann z.B. die Salzschmelze S, wie oben beschrieben, mit etwa 300°C in den Plattenwärmeübertrager 1 eingespeist werden und nimmt dann Wärme auf, die in dem Thermoöl W gespeichert ist, das z.B. mit einer Temperatur im Bereich von 400°C in den Plattenwärmeübertrager 1 eingeleitet wird. Das Thermoöl kann z.B. zuvor durch Sonnenergie im Solarthermiekraftwerk erhitzt worden sein.

Des Weiteren können grundsätzlich die Strömungsrichtungen der Ströme S und W gemäß Figur 2 umgekehrt werden, so dass die Salzschmelze S am unteren Ende des Plattenwärmetauschers 1 eingeleitet wird und der zweite Wärmeträger am oberen Ende.

## Patentansprüche

1. Verfahren zum indirekten Wärmeaustausch zwischen einer Salzschmelze (S) als erstem Wärmeträger und mindestens einem zweiten Wärmeträger (W) in einem Solarthermiekraftwerk,
**dadurch gekennzeichnet,**
**dass** die Salzschmelze (S) und der zweite Wärmeträger (W) zur Durchführung des indirekten Wärmetauschs durch nebeneinanander angeordnete Passagen (3) eines Plattenwärmeübertragers (1) geleitet werden, wobei die Passagen (3) jeweils eine Wärmeleitstruktur (30) aufweisen.

2. Verfahren nach Anspruch 1, **dadurch gekennzeichnet, dass** die Wärmeleitstrukturen (30) aus einem Stahl gefertigt sind oder einen Stahl aufweisen.

3. Verfahren nach Anspruch 1 oder 2, **dadurch gekennzeichnet, dass** die jeweilige Wärmeleitstruktur (30) zwischen je zwei einander gegenüberliegenden Trennblechen (4) angeordnet ist.

4. Verfahren nach Anspruch 3, **dadurch gekennzeichnet, dass** die Trennbleche (4) aus einem Stahl gefertigt sind oder einen Stahl aufweisen.

5. Verfahren nach Anspruch 3 oder 4, **dadurch gekennzeichnet, dass** benachbarte Trennbleche (4) über eine Lötverbindung (V) mit einander verbunden sind.

6. Verfahren nach einem der Ansprüche 3 bis 5, **dadurch gekennzeichnet, dass** die jeweilige Wärmeleitstruktur (30) mit den jeweils beidseitig angeordneten Trennblechen (4) über je eine Lötverbindung (V) verbunden ist.

7. Verfahren nach einem der vorhergehenden Ansprüche, **dadurch gekennzeichnet, dass** die jeweilige Wärmeleitstruktur (30) eine wellenförmige Struktur und/oder eine Mehrzahl an Metallprofilen (P, P') aufweist, insbesondere in Form von Hohlprofilen (P) oder Doppel-T-Profilen (P').

8. Verfahren nach einem der vorhergehenden Anprüche, **dadurch gekennzeichnet, dass** die Temperatur der Salzschmelze (S) in einem Bereich zwischen 300°C bis 600°C, insbesondere im Bereich zwischen 400°C bis 600°C liegt.

9. Verfahren nach einem der vorangehenden Ansprüche, **dadurch gekennzeichnet, dass** der zweite Wärmeträger (W) eine Salzschmelze, Wasser, Dampf, Ammoniak, überkritisches Kohlendioxid oder ein Thermoöl ist.

10. Verfahren nach einem der vorangehenden Ansprüche, **dadurch gekennzeichnet, dass** die gesamte zwischen der Salzschmelze (S) und dem zweiten Wärmeträger (W) zu übertragende Wärmemenge in mehreren parallel geschalteten Plattenwärmeübertragern (1) ausgetauscht wird.

11. Solarthermiekraftwerk, mit zumindest einem Wärmeübertrager (1), der zum indirekten Wärmeaustausch zwischen einer Salzschmelze (S) als erstem Wärmeträger und mindestens einem zweiten Wärmeträger (W) ausgebildet ist,
**dadurch gekennzeichnet,**
**dass** der mindestens eine Wärmeübertrager als ein Plattenwärmeübertrager (1) ausgebildet ist, der zum Führen der Salzschmelze (2) und des zweiten Wärmeträgers (15) Passagen (3) mit je einer Wärmeleitstruktur (30) aufweist, wobei insbesondere die Wärmeleitstrukturen (30) aus einem Stahl gefertigt sind oder einen Stahl aufweisen.

12. Solarthermiekraftwerk nach Anspruch 11, **dadurch gekennzeichnet, dass** die jeweilige Wärmeleitstruktur (30) zwischen je zwei einander gegenüberliegenden Trennblechen (4) angeordnet ist.

13. Solarthermiekraftwerk nach Anspruch 12, **dadurch gekennzeichnet, dass** die Trennbleche (4) aus einem Stahl gefertigt sind oder einen Stahl aufweisen.

14. Solarthermiekraftwerk nach Anspruch 12 oder 13, **dadurch gekennzeichnet, dass** benachbarte Trennbleche (4) über eine Lötverbindung (V) mit einander verbunden sind.

15. Solarthermiekraftwerk nach einem der Ansprüche 12 bis 14, **dadurch gekennzeichnet, dass** die jeweilige Wärmeleitstruktur (30) mit den jeweils beidseitig angeordneten Trennblechen (4) über je eine Lötverbindung (V) verbunden ist.
